(19) **Europäisches Patentamt / European Patent Office / Office européen des brevets**

(11) **EP 2 099 849 B1**

(12) **FASCICULE DE BREVET EUROPEEN**

(45) Date de publication et mention de la délivrance du brevet:
**18.06.2014 Bulletin 2014/25**

(21) Numéro de dépôt: **07857319.3**

(22) Date de dépôt: **10.12.2007**

(51) Int Cl.:
*C08J 5/06* (2006.01)          *D06M 14/36* (2006.01)
*D06M 15/273* (2006.01)

(86) Numéro de dépôt international:
**PCT/EP2007/063597**

(87) Numéro de publication internationale:
**WO 2008/071652 (19.06.2008 Gazette 2008/25)**

(54) **PROCEDE POUR AMELIORER L'ADHERENCE DE FIBRES DE CARBONE VIS-A-VIS D'UNE MATRICE ORGANIQUE**

VERFAHREN ZUR VERBESSERUNG DER HAFTUNG VON KOHLEFASERN ZU EINER ORGANISCHEN MATRIX

METHOD FOR IMPROVING THE ADHESION OF CARBON FIBRES TO AN ORGANIC MATRIX

(84) Etats contractants désignés:
**AT BE BG CH CY CZ DE DK EE ES FI GB GR HU IE IS IT LI LT LU LV MC MT NL PL PT RO SE SI SK TR**

(30) Priorité: **11.12.2006  FR 0655417**

(43) Date de publication de la demande:
**16.09.2009  Bulletin 2009/38**

(73) Titulaire: **Astrium SAS**
**75016 Paris (FR)**

(72) Inventeurs:
• **SCHULTZ, Jacques**
**68400 Riedisheim (FR)**
• **NARDIN, Michel**
**90150 Angeot (FR)**
• **VAUTARD, Frédéric**
**88800 Parey sous Montfort (FR)**
• **ROUCOULES, Vincent**
**68130 Carspach (FR)**
• **DEFOORT, Brigitte**
**33160 Saint Médard en Jalles (FR)**

(74) Mandataire: **Ilgart, Jean-Christophe**
**BREVALEX**
**95 rue d'Amsterdam**
**75378 Paris Cedex 8 (FR)**

(56) Documents cités:
**EP-A1- 0 965 679      WO-A-2007/031576**
**JP-A- 5 195 440      US-A- 3 837 904**
**US-A- 3 994 742**

• **SIFFER F ET AL: "A chemometric investigation of the effect of the process parameters during maleic anhydride pulsed plasma polymerization" 10 mai 2005 (2005-05-10), ANALYTICA CHIMICA ACTA, ELSEVIER, AMSTERDAM, NL, PAGE(S) 289-299 , XP004875742 ISSN: 0003-2670 cité dans la demande abrégé page 289, colonne de gauche, alinéa 1 - page 290, colonne de gauche, alinéa 2 page 298, colonne de droite, alinéa 2 - page 299, colonne de gauche, alinéa 1**
• **DATABASE WPI Week 198136 Derwent Publications Ltd., London, GB; AN 1981-65287D XP002440047 -& JP 56 091071 A (HASHIMOTO K) 23 juillet 1981 (1981-07-23)**

**Description**

**DOMAINE TECHNIQUE**

La présente invention se rapporte à un procédé permettant d'améliorer l'adhérence de fibres de carbone vis-à-vis d'une matrice organique formant avec ces fibres un matériau composite et résultant de la polymérisation en chaîne d'une résine durcissable.

Ce procédé, qui permet d'obtenir des matériaux composites aux propriétés remarquables de résistance aux sollicitations, tant transverses (c'est-à-dire perpendiculaires à l'axe des fibres de carbone) que longitudinales (c'est-à-dire dans l'axe des fibres de carbone), trouve un intérêt tout particulier dans les industries aéronautique et aérospatiale, notamment pour la fabrication de pièces de grandes dimensions comme, par exemple, de pièces de voilure ou de fuselage.

Toutefois, il peut également être utilisé dans d'autres types d'industrie comme les industries navale, ferrovière ou automobile, l'industrie de l'armement, par exemple pour la réalisation de pièces entrant dans la constitution de missiles ou de tubes lance-missiles, ou encore celle des articles de sports et de loisirs, par exemple pour la réalisation d'articles destinés aux sports nautiques et de glisse.

**ÉTAT DE LA TECHNIQUE ANTÉRIEURE**

Les matériaux composites sont des matériaux hétérogènes qui permettent d'exploiter les propriétés mécaniques exceptionnelles de matériaux que l'on ne sait pas fabriquer sous forme massive mais seulement sous forme de fibres en les noyant dans une matrice formée d'un polymère organique (ou résine) durci, qui permet de lier les fibres entre elles, d'assurer une répartition des contraintes dans le matériau composite et de protéger les fibres contre les agressions chimiques.

Une condition indispensable à l'obtention d'un matériau composite à hautes performances est que la liaison entre les fibres et la matrice qui le constituent soit bonne. En effet, si la liaison fibres/ matrice est insuffisante, alors on obtient un matériau composite aux propriétés mécaniques transverses (comme la résistance au cisaillement) médiocres et, donc, aux possibilités d'utilisation très limitées, les pièces en matériaux composites étant le plus souvent destinées à travailler en état de contrainte tridirectionnelle.

Le carbone est chimiquement peu réactif et présente naturellement une faible adhérence vis-à-vis des matrices polymériques. Aussi, les fabricants de fibres de carbone ont-ils cherché d'emblée à adapter leurs fibres aux résines destinées à être utilisées comme matrices par les fabricants de pièces en matériaux composites.

C'est ainsi qu'il a été proposé :

1°) des traitements de surface qui visent tous à créer à la surface des fibres des groupes fonctionnels aptes à réagir avec des fonctions chimiques portées par les résines ; il s'agit principalement de traitements d'oxydation chimique ou électrolytique (voir par exemple, JP-A-3076869 [1]) mais d'autres types de traitement ont également été décrits comme des traitements thermiques par plasma (voir, par exemple, EP-A-1 484 435 **[2]**), une électrolyse en milieu acide ou basique (EP-A-0 640 702 **[3]**) ou encore l'implantation d'atomes de type Si ou B (JP-B-2002-327374 **[4]**) ;

2°) l'utilisation d'ensimages spécifiques, c'est-à-dire par le dépôt sur la surface des fibres de produits dont le rôle est d'augmenter la compatibilité des fibres vis-à-vis des résines, de faciliter leur imprégnation par les résines et d'assurer un "*accrochage*" entre les fibres et les matrices formées par la polymérisation de ces résines ; d'une manière générale, les agents d'ensimage utilisés sont des polymères ou copolymères aux structures chimiques complexes et dont le choix est principalement guidé par l'expérience ;

3°) le greffage sur la surface des fibres d'une phase élastomérique (Wu et al., Carbon, 34, 59-67, 1996 **[5]**) ou de polymères de type polyesters, polymères vinyliques (polystyrène notamment) ou polyacétals (Tsubokawa, Carbon, 31, 1257-1263, 1993 **[6]**) susceptibles, là également, d'augmenter la compatibilité des fibres vis-à-vis des résines ; et

4°) le dépôt sur la surface des fibres d'un polymère comportant deux types de groupes : des groupes polaires, dont la fonction est d'assurer une attraction électrique entre le polymère et la surface des fibres, et des groupes dont la fonction est de réagir avec la résine, qui est destinée à servir de matrice, pour se lier chimiquement à elle, c'est-à-dire par l'établissement de laisons covalentes (EP-A-0 965 679 **[8]**).

Il est à noter que des ensimages sont également utilisés sur les fibres de carbone dans d'autres buts que celui d'améliorer leur liaison avec une matrice organique comme, par exemple, celui de faciliter leur manipulation.

Si les traitements évoqués ci-dessus sont, d'une manière générale, relativement efficaces dans le cas de matrices obtenues par polymérisation thermique de résines (c'est-à-dire induite par la chaleur), il s'avère qu'ils ne le sont pas, ou insuffisamment, lorsque les matrices sont réalisées avec des résines dont la polymérisation est induite par un rayonnement lumineux (lumière visible ou ultraviolette) ou ionisant (rayonnement $\beta$, $\gamma$ ou rayons X).

En effet, l'expérience montre que les composites obtenus avec des résines polymérisées sous rayonnement présentent des performances mécaniques transverses nettement inférieures à celles des meilleurs composites réalisés avec des résines polymérisées par voie thermique, ce qui est classiquement interprété comme le fait que la liaison fibres/matrice reste insuffisante en dépit des traitements appliqués aux fibres de carbone par leurs fabricants.

Or, la polymérisation de résines sous rayonnement présente, par ailleurs, un certain nombre d'avantages par rapport à la polymérisation de résines par voie thermique, ces avantages étant notamment liés à la possibilité de travailler sans autoclaves et, donc, de fabriquer plus aisément des pièces composites de grande taille ou de structure complexe, et d'obtenir des vitesses de polymérisation beaucoup plus élevées, ce qui permet des cadences de production supérieures pour des coûts inférieurs.

Il serait donc souhaitable de parvenir à améliorer l'adhérence de fibres de carbone vis-à-vis d'une matrice polymérique dans le cas où cette matrice est obtenue par polymérisation sous rayonnement d'une résine durcissable, et plus précisément d'une résine à polymérisation en chaîne puisque, en pratique, les résines qui sont capables de polymériser sous rayonnement sont des résines dont la polymérisation s'effectue par un mécanisme en chaîne.

Dans le cadre de leurs travaux, les Inventeurs ont constaté que si l'on greffe, sur la surface de fibres de carbone, des fonctions aptes à jouer le rôle d'agents de transfert de chaîne pendant la polymérisation de la résine, alors on obtient une amélioration significative de l'adhérence fibres/ matrice, vraisemblablement parce que ces fonctions se transforment, pendant la polymérisation de la résine, en centres actifs, radicalaires ou ioniques, par réaction avec des chaînes polymères en croissance, et sont alors capables d'amorcer la formation, à partir de la surface des fibres, de nouvelles chaînes polymères qui sont liées de façon covalente à cette surface dès leur création et qui facilitent ensuite le transfert des contraintes de la matrice vers les fibres.

Toutefois, ils ont également constaté que certaines des fonctions présentes à la surface des fibres de carbone avant que ne soit réalisé ce greffage - et qui sont inhérentes au procédé par lequel ces fibres ont été obtenues - sont susceptibles d'exercer un effet inhibiteur sur la polymérisation en chaîne de résines et de limiter ainsi le bénéfice obtenu par l'apport de fonctions aptes à servir d'agents de transfert de chaîne.

Et c'est sur cette double constatation qu'est basée la présente invention.

## EXPOSÉ DE L'INVENTION

La présente invention a donc pour objet un procédé pour améliorer l'adhérence de fibres de carbone vis-à-vis d'une matrice organique formant avec ces fibres un matériau composite, ce matériau composite étant obtenu par mise en contact des fibres avec une résine durcissable par polymérisation en chaîne, puis polymérisation de la résine, lequel procédé consiste à revêtir la surface des fibres de carbone, avant que ces fibres ne soient mises en contact avec la résine, d'un film polymère comportant des fonctions servant d'agents de transfert de chaîne pendant la polymérisation de ladite résine, le film polymère étant obtenu par dépôt chimique en phase vapeur assisté par plasma (PACVD).

Ainsi, selon l'invention, c'est en revêtant la surface des fibres de carbone, avant que celles-ci n'entrent dans le processus de fabrication du matériau composite, d'un film polymère permettant à la fois :

■ d'isoler la surface des fibres du milieu dans lequel elles se trouvent et, en particulier, de la résine, et d'éviter ainsi que la polymérisation de cette résine ne soit inhibée par les fonctions présentes sur la surface des fibres par suite de leur procédé de fabrication,
■ de conférer aux fibres un état de surface homogène, la surface du film polymère se substituant, en effet, à la surface de ces fibres, et
■ de recouvrir les fibres de fonctions qui sont toutes capables de jouer le rôle d'agents de transfert de chaîne pendant la polymérisation de la résine,

que l'on augmente l'adhérence de ces fibres vis-à-vis de la matrice organique.

Les fibres de carbone telles qu'obtenues par les procédés conventionnels de pyrolyse de polyacrylonitrile (PAN), de rayonne, de viscose, de brai et autres résidus pétroliers, sont composées chacune d'une multitude de monofilaments, lesquels peuvent être plus ou moins liés entre eux selon les traitements auxquels ont été soumises ces fibres au cours de leur fabrication. De ce fait, dans ce qui précède et ce qui suit, on entend par *"surface des fibres"* aussi bien la surface des monofilaments eux-mêmes que la surface d'assemblages résultant de la liaison d'une pluralité de monofilaments entre eux. De la même façon, on entend par *"surface d'une fibre"*, aussi bien la surface d'un monofilament que celle d'un assemblage résultant de la liaison de plusieurs monofilaments entre eux.

Par ailleurs, dans ce qui précède et ce qui suit, le terme "*polymérisation*" doit être compris comme comprenant non seulement la formation de chaînes polymères par liaison de monomères ou prépolymères entre eux, mais également la formation d'un réseau tridimensionnel par l'établissement de liaisons entre ces chaînes polymères, que l'on appelle communément réticulation.

Conformément à l'invention, les fonctions que comporte le film polymère peuvent être choisies parmi les nombreuses fonctions connues pour être capables de jouer le rôle d'agents de transfert de chaîne dans une polymérisation en chaîne, étant entendu que l'on retiendra, de préférence, celle ou celles qui sont susceptibles de conduire à une liaison film/ matrice la plus satisfaisante possible, compte tenu de la résine durcissable devant être utilisée ou des conditions dans lesquelles cette dernière doit être polymérisée.

A cet égard, il est tout à fait possible d'évaluer l'effet de différentes fonctions sur l'adhérence de fibres de carbone vis-à-vis d'une matrice obtenue à partir d'une résine particulière ou dans des conditions de polymérisation particulières, par exemple en soumettant des fibres que l'on aura préalablement revêtues d'un film polymère comportant l'une de ces fonctions à un test classiquement utilisé pour apprécier les propriétés mécaniques d'une interface fibres/matrice comme, par exemple, un test de déchaussement du type de celui décrit dans l'exemple 1 ci-après, et en comparant les résultats obtenus pour les différentes fonctions ainsi testées.

Comme fonctions servant d'agents de transfert de chaîne, on peut notamment citer les fonctions -I, -Br, -Cl, -F, -SH, -OH, -NH-, -NH$_2$, -PH-, -PH$_2$, =S, ainsi que les fonctions carbonées dénuées d'hétéroatome mais pouvant donner lieu à un transfert radicalaire comme, par exemple, des fonctions -CH allyliques ou benzyliques éventuellement substituées.

Il se trouve que, dans le cadre de leurs travaux, les Inventeurs ont constaté que les fonctions thiol (-SH) permettent d'obtenir une amélioration particulièrement significative de l'adhérence de fibres de carbone vis-à-vis de matrices organiques, notamment lorsque ces matrices sont obtenues par polymérisation de résines époxy acrylates sous rayonnement ionisant.

Aussi, les fonctions thiol sont-elles celles que l'on préfère.

Conformément à l'invention, il est possible de revêtir la surface des fibres de carbone dudit film polymère de différentes façons.

En effet, on peut tout d'abord, polymériser sur la surface des fibres un monomère polymérisable qui comprend une fonction servant d'agent de transfert de chaîne, auquel cas on obtient un film polymère qui comporte, dès sa formation sur la surface des fibres, des fonctions servant d'agents de transfert de chaîne.

Ainsi, par exemple, dans le cas où l'on souhaite que les fonctions servant d'agents de transfert de chaîne soient des fonctions thiol, le film polymère peut être obtenu par polymérisation d'un mercaptan polymérisable comme, par exemple, le 2-propène-1-thiol, encore connu sous le nom d'allyl mercaptan.

On peut également polymériser sur la surface des fibres un monomère qui comprend une fonction pouvant être convertie ultérieurement, par réaction chimique, en une fonction servant d'agent de transfert de chaîne, auquel cas on obtient un film polymère qui comporte des fonctions que l'on convertit secondairement en fonctions servant d'agents de transfert de chaîne.

On peut encore polymériser sur la surface des fibres un monomère polymérisable qui comporte une fonction propre à permettre le greffage d'une fonction servant d'agent de transfert de chaîne, auquel cas on obtient un film polymère sur lequel on greffe secondairement des fonctions servant d'agents de transfert de chaîne.

Dans ce cas, le greffage peut être réalisé en faisant réagir les fonctions présentes à la surface du film polymère avec un composé organique qui comporte une fonction servant d'agent de transfert de chaîne ou qui génère, au cours de la réaction, des groupes comprenant une telle fonction.

Ainsi, par exemple, dans le cas où l'on souhaite que les fonctions servant d'agents de transfert de chaîne soient des fonctions thiol, il est possible de déposer sur la surface des fibres un film polymère comportant des fonctions carboxyle, puis de faire réagir ces fonctions carboxyle avec un épisulfure qui, par ouverture de cycle, se lie de façon covalente à ces fonctions carboxyle et génère simultanément des groupes à fonction thiol.

Un film polymère comportant des fonctions carboxyle est, par exemple, un film obtenu par polymérisation d'un acide polymérisable ou d'un dérivé d'acide polymérisable comme, par exemple, un anhydride d'acide puisque les fonctions anhydride s'hydrolysent spontanément en fonctions acide carboxylique à l'air ambiant. A titre d'exemples d'acide polymérisable, on peut citer l'acide acrylique et l'acide méthacrylique, et, à titre d'exemple d'anhydride d'acide polymérisable, l'anhydride maléique.

Quant à l'épisulfure, il peut être, par exemple, le sulfure de propylène, le sulfure d'éthylène, le sulfure de cyclohexène, l'épithiodécane, l'épithiododécane ou le 7-thiabicyclo[4.1.0]heptane.

Que le film polymère porte ou non d'emblée des fonctions servant d'agents de transfert de chaîne, il est préférable que ce film forme à la surface des fibres de carbone un revêtement continu et adhérent à cette surface, d'épaisseur suffisante pour remplir convenablement son rôle de barrière entre la surface des fibres et le milieu dans lequel elles se trouvent, mais pas trop élevée pour ne pas altérer de façon sensible les propriétés mécaniques de ces fibres, en particulier leur module élastique et leur ténacité.

Aussi, le film polymère présente-t-il typiquement une épaisseur allant de 10 à 50 nm, de préférence de 10 à 30 nm et, mieux encore, de 15 à 25 nm.

Pour ce faire, il est obtenu par la technique dite de dépôt chimique en phase vapeur assisté par plasma, qui est plus simplement dénommée dans la littérature PACVD (pour "*Plasma Assisted Chemical Vapor Deposition*") ou polymérisation plasma et qui permet de former un film polymère de très faible épaisseur sur la surface d'un substrat, à partir d'une phase gazeuse contenant le monomère précurseur de ce polymère. Cette technique de déposition présente, entre autres avantages, celui d'être utilisable pour une très grande variété à la fois de monomères et de substrats.

Dans le cadre de l'invention, on préfère que le plasma soit induit par radiofréquence en mode pulsé, une activation pulsée des monomères permettant, en effet, d'obtenir un taux de rétention du film polymère qui se forme sur la surface des fibres supérieur à celui qui serait obtenu par une activation continue et, ainsi, une fonctionnalisation de cette surface plus importante.

Bien entendu, il est également possible d'utiliser des techniques de déposition autres que la polymérisation plasma dès lors qu'elles se prêtent au dépôt de polymères, sous forme de films minces et adhérents, sur des substrats carbonés, ce qui est, par exemple, le cas de l'électrodéposition ou du dépôt chimique en phase vapeur (ou CVD pour "*Chemical Vapor Deposition*").

Une fois les fibres de carbone traitées par le procédé selon l'invention, elles peuvent soit être immédiatement utilisées dans la fabrication de pièces en matériaux composites, soit être stockées en vue d'une utilisation ultérieure, soit encore être conditionnées, par exemple sous forme de mats préimprégnés, en vue de leur livraison à des fabricants de pièces en matériaux composites. En effet, le procédé selon l'invention peut aussi bien être mis en oeuvre par les fabricants de fibres de carbone que par leurs utilisateurs.

Outre les avantages précédemment mentionnés, le procédé selon l'invention présente encore ceux d'être applicable à de très nombreux types de fibres de carbone entrant dans la fabrication de matériaux composites (fibres longues, semi-longues, fibres courtes, fibres oxydées, fibres ensimées, ...), d'être relativement simple à mettre en oeuvre et d'avoir un coût tout à fait compatible avec une exploitation à une échelle industrielle.

L'invention a également pour objet un procédé de fabrication d'une pièce en matériau composite comprenant des fibres de carbone et une matrice organique, lequel procédé comprend la mise en contact des fibres avec une résine durcissable par polymérisation en chaîne, puis la polymérisation de la résine, et est caractérisé en ce qu'il comprend de plus la mise en oeuvre d'un procédé tel que décrit précédemment, avant que les fibres ne soient mises en contact avec ladite résine.

Conformément à l'invention, la résine durcissable peut être choisie parmi toutes les résines qui sont aptes à durcir par un mécanisme de polymérisation en chaîne et ce, que ce soit sous l'effet de la chaleur ou sous l'effet d'un rayonnement lumineux ou ionisant, les Inventeurs ayant, en effet constaté, dans le cadre de leurs travaux, que le procédé selon l'invention est efficace aussi bien dans le cas d'une résine thermodurcissable que d'une résine photo- ou radiodurcissable.

Toutefois, pour les raisons précédemment exposées, la résine est, de préférence, choisie parmi les résines polymérisables sous rayonnement, et en particulier parmi les résines de type multiacrylates comme les époxy acrylates, les novolaque acrylates et les polyuréthanne acrylates, les résines bis-maléimides et les résines époxydes, les résines époxy acrylates étant particulièrement préférées dans le cas où le matériau composite est destiné à des applications spatiales ou aéronautiques.

Il va de soi que la fabrication de cette pièce en matériau composite peut être réalisée selon toutes les techniques connues de l'homme du métier des matériaux composites comme, par exemple, le moulage par projection simultanée, le moulage sous vide, le moulage par injection basse pression de résine (ou "*Resin Transfert Molding*" - RTM - en langue anglaise), le moulage à la presse à froid "*voie humide*" basse pression, le moulage par injection de compound (ou "*Bulk Molding Compound*" - BMC - en langue anglaise), le moulage par compression de mats préimprégnés ("*Sheet Molding Compound*" - .SMC - en langue anglaise), le moulage par enroulement filamentaire, le moulage par centrifugation ou encore le moulage par pultrusion.

D'autres caractéristiques et avantages du procédé selon l'invention apparaîtront mieux à la lecture du complément de description qui suit, qui se rapporte à un exemple de mise en oeuvre de ce procédé et se réfère au dessin annexé.

Bien entendu, cet exemple n'est donné qu'à titre d'illustration de l'objet de l'invention et ne constitue en aucun cas une limitation de cet objet.

## BRÈVE DESCRIPTION DU DESSIN

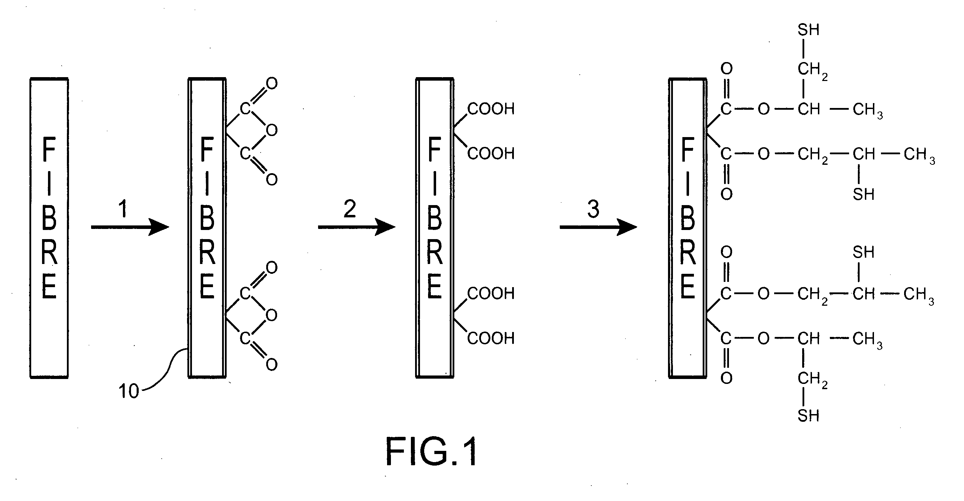

La figure 1 illustre, de façon schématique, les différentes étapes d'un exemple de mise en oeuvre du procédé selon l'invention, dans lequel la surface de fibres de carbone est revêtue d'un film polymère comportant des fonctions thiol.

## EXPOSÉ DÉTAILLÉ D'UN EXEMPLE DE MISE EN OEUVRE DU PROCEDE SELON L'INVENTION

Le présent exemple est relatif au traitement de fibres de carbone pour en revêtir la surface d'un film polymère comportant des fonctions thiol.

Comme visible sur la figure 1, qui illustre schématiquement les étapes de ce traitement, ce dernier comprend :

■ le dépôt d'un film de poly(anhydride maléique) sur la surface des fibres, par polymérisation plasma radiofréquence et pulsée d'anhydride maléique ; puis

■ le greffage de groupes à fonction thiol sur le film de poly(anhydride maléique) ainsi obtenu.

Les fibres de carbone utilisées sont des fibres TENAX® IMS 5001, commercialisées par la société Toho Tenax Europe GmbH. Il s'agit de fibres ex-PAN à module intermédiaire, ayant subi un traitement d'oxydation électrolytique de surface au cours de leur fabrication.

La polymérisation plasma de l'anhydride maléique - qui correspond à l'étape 1 de la figure 1 - est réalisée au moyen d'un dispositif de PACVD analogue à celui décrit par Siffer et al. dans *Analytica Chimica Acta*, 539, 289-299, 2005 [7]. Brièvement, ce dispositif comprend un réacteur cylindrique en verre autour duquel sont enroulées des bobines de cuivre permettant d'induire des décharges électriques dans le plasma, un générateur de radiofréquence et une boite d'accord équilibrant l'impédance du réacteur à celle du générateur.

Les fibres de carbone sont placées dans le réacteur sous la forme d'une mèche dont les extrémités sont fixées sur les deux bords opposés d'un cadre vertical en carton ou en verre.

On utilise les paramètres opératoires suivants :

puissance de décharge : 5 W
pression : $2{,}6.10^{-1}$ mbar
débit de l'anhydride maléique : $1{,}6.10^{-9}$ kg.s$^{-1}$
pulse "on-time" : 20 $\mu$s
pulse "off-time" : 1200 $\mu$s
temps de dépôt : 30 min.

En fin de traitement, le générateur est éteint et l'anhydride maléique en phase vapeur continue de traverser le réacteur pendant 5 minutes.

On obtient ainsi des fibres de carbone dont la surface est entièrement revêtue d'un film (référencé 10 sur la figure 1) de poly(anhydride maléique) de 20 nm d'épaisseur, dont environ 32% des fonctions anhydride n'ont pas polymérisé.

Comme illustré par l'étape 2 de la figure 1, ces fonctions anhydride s'hydrolysent rapidement à l'air ambiant en fonctions acide carboxylique.

Le greffage des groupes à fonction thiol - qui correspond à l'étape 3 de la figure 1 - est réalisé en faisant réagir ces fonctions acide carboxylique avec du sulfure de propylène, dans un solvant organique et en présence de triéthylamine. Par cette réaction, deux types de groupes à fonction thiol, dont la structure chimique est montrée sur la figure 1, sont susceptibles de se fixer sur le film de poly(anhydride maléique).

Le solvant utilisé est le toluène, sa faible polarité permettant, en effet, de limiter l'occurrence de réactions secondaires indésirables.

La réaction est réalisée en utilisant 53,6 mmoles de sulfure de propylène, 5,7 mmoles de triéthylamine et 45 mL de toluène pour 0,6 g de fibres de carbone.

Elle est conduite en milieu confiné, sans ajout de pression, à 90°C et pendant 10 heures.

En pratique, on utilise un ballon en verre. L'agitation et la température désirée sont fournies par un agitateur magnétique chauffant et un barreau aimanté. Par ailleurs, afin d'éviter que les fibres ne s'emmêlent autour de l'agitateur, elles sont placées dans le ballon en étant préalablement enfermées dans un sachet de non tissé en polypropylène, perméable mais résistant au toluène.

Au terme des 10 heures de réaction, les fibres sont soumises à deux lavages avec une solution d'acide acétique/toluène (10/90, v/v) pour éliminer la triéthylamine, et enfin à deux lavages au toluène, chaque lavage étant réalisé rapidement dans un bécher.

Les fibres sont ensuite soumises à une extraction soxhlet au toluène pendant 5 à 6 heures pour éliminer toutes les impuretés susceptibles d'être présentes à leur surface, suivie d'un séchage de 12 heures à 40°C sous vide primaire. Elles sont alors conservées dans des sachets de polyéthylène que l'on entrepose dans un dessiccateur.

L'adhérence des fibres de carbone ainsi traitées vis-à-vis d'une matrice organique obtenue par polymérisation en chaîne d'une résine est appréciée par un test de déchaussement. Pour ce faire, on utilise une résine époxy-acrylate commercialisée par la société UCB Chemicals sous la référence EB600.

Brièvement, ce test de déchaussement consiste à plonger l'extrémité d'un monofilament dans une microgoutte de résine, d'induire la polymérisation de la résine à température ambiante, soit sous faisceau d'électrons, soit par irradiation UV, puis à exercer une contrainte en traction sur l'autre extrémité du monofilament, à la vitesse de 1 mm/min, tout en maintenant la goutte de résine fixe.

On enregistre la force de traction dans le temps. La force de traction maximale enregistrée est considérée comme la force nécessaire au déchaussement du monofilament hors de la goutte de résine durcie.

On détermine la résistance à la rupture interfaciale (plus connue sous l'acronyme anglais IFSS pour "*InterFacial*

*Shear Strength*") à l'aide de la formule suivante :

$$\tau = \frac{\sigma f d}{4\,L} = \frac{F}{2\pi r L}$$

dans laquelle :

*d* représente le diamètre du monofilament, exprimé en mètre ;
*r* représente le rayon du monofilament, exprimé en mètre ;
*L* représente la longueur de monofilament initialement enchâssée dans la goutte de résine, exprimée en mètre ;
*F* représente la force nécessaire au déchaussement du monofilament hors de la goutte de résine durcie, exprimée en newton, et

$$\sigma f \;=\; \frac{F}{\pi r^2} \quad \text{(en newton/m}^2\text{)}.$$

Les valeurs d'IFSS obtenues pour les fibres IMS 5001 traitées conformément à l'invention sont présentées dans le tableau I ci-après.

A titre comparatif, sont également consignées dans ce tableau les valeurs d'IFSS obtenues pour, d'une part, des fibres IMS 5001 n'ayant subi aucun traitement et, d'autre part, des fibres IMS 5001 sur la surface desquelles ont été greffés directement (c'est-à-dire sans dépôt préalable d'un film de poly(anhydride maléique)) des groupes à fonction thiol par réaction des groupes acide carboxylique présents à la surface de ces fibres avec du sulfure de propylène dans des conditions analogues à celles précédemment décrites.

TABLEAU 1

| Fibres | IFSS (MPa) | |
|---|---|---|
| | Polymérisation sous faisceau d'électrons | Polymérisation sous irradiation UV |
| Fibres non traitées | 34 ± 3 | 49 ± 3 |
| Fibres greffées de groupes carbonés à fonction thiol | 59 ± 3 | --- |
| Fibres traitées conformément à l'invention | 78 ± 8 | 76 ± 3 |

Ce tableau montre que l'adhérence de fibres de carbone vis-à-vis d'une matrice obtenue par polymérisation d'une résine, sous rayonnement lumineux ou ionisant, est augmentée de manière très significative lorsque la surface de ces fibres est préalablement revêtue d'un film polymère comportant des fonctions thiol, propres à servir d'agents de transfert de chaîne au cours de la polymérisation de la résine.

Il montre également que si, dans le cas de fibres de carbone non traitées, l'adhérence des fibres vis-à-vis de la matrice est sensiblement différente selon que la polymérisation de la résine est induite par une irradiation ultraviolette ou par un faisceau d'électrons, il n'existe plus de différence significative entre ces deux modes d'induction dans le cas de fibres traitées conformément à l'invention.

L'invention ne se limite nullement au mode de mise en oeuvre qui vient d'être spécifiquement décrit. Ainsi, par exemple, il est tout à fait envisageable de traiter par le procédé selon l'invention des fibres de carbone ensimées, auquel cas on éliminera préalablement l'ensimage de ces fibres, par exemple par dissolution par solvants comme cela est bien connu dans l'état de la technique.

**DOCUMENTS CITES**

[1] JP-A-3076869
[2] EP-A-1 484 435

[3] EP-A-0 640 702

[4] JP-B-2002-327374

[5] Wu et al., Carbon, 34, 59-67, 1996

[6] Tsubokawa, Carbon, 31, 1257-1263, 1993

[7] Siffer et al., Analytica Chimica Acta, 539, 289-299, 2005

[8] EP-A-0 965 679

## Revendications

1. Procédé pour améliorer l'adhérence de fibres de carbone vis-à-vis d'une matrice organique formant avec ces fibres Un matériau composite, ce matériau composite étant obtenu par mise en contact des fibres avec une résine durcissable par polymérisation en chaîne, puis polymérisation de la résine, lequel procédé consiste à revêtir la surface des fibres de carbone, avant que ces fibres ne soient mises en contact avec la résine, d'un film polymère qui comporte des fonctions servant d'agents de transfert de chaîne pendant la polymérisation de ladite résine, le film polymère étant obtenu par dépôt chimique en phase vapeur assisté par plasma (PACVD).

2. Procédé selon la revendication 1, dans lequel les fonctions servant d'agents de transfert de chaîne sont des fonctions -I, -Br, -Cl, -F, -SH, -OH, -NH-, -NH$_2$, -PH-, -PH$_2$ ou =S.

3. Procédé selon la revendication 2, dans lequel les fonctions servant d'agents de transfert de chaîne sont des fonctions thiol.

4. Procédé selon l'une quelconque des revendications précédentes, dans lequel la surface des fibres de carbone est revêtue dudit film polymère par polymérisation sur cette surface d'un monomère polymérisable comprenant une fonction servant d'agent de transfert de chaîne.

5. Procédé selon l'une quelconque des revendications 1 à 3, dans lequel la surface des fibres de carbone est revêtue dudit film polymère par :

   a) polymérisation sur cette surface d'un monomère polymérisable comprenant une fonction pouvant être convertie en une fonction servant d'agent de transfert de chaîne, puis
   b) conversion des fonctions que comporte le film polymère ainsi obtenu.

6. Procédé selon l'une quelconque des revendications 1 à 3, dans lequel la surface des fibres de carbone est revêtue dudit film polymère par :

   a) polymérisation sur cette surface d'un monomère polymérisable, puis
   b) greffage sur le film polymère ainsi obtenu de fonctions servant d'agents de transfert de chaîne.

7. Procédé selon la revendication 6, dans lequel le greffage est réalisé en faisant réagir les fonctions présentes à la surface du film polymère avec un composé organique qui, par ouverture de cycle, se lie de façon covalente auxdites fonctions et génère des groupes comprenant une fonction servant d'agent de transfert de chaîne.

8. Procédé selon la revendication 7, dans lequel les fonctions présentes à la surface du film polymère sont des fonctions carboxyle et sont mises à réagir avec un épisulfure qui génère des groupes comprenant une fonction thiol.

9. Procédé selon la revendication 8, dans lequel le film polymère comprenant des fonctions carboxyle est obtenu par polymérisation d'un acide polymérisable ou d'un dérivé d'acide polymérisable.

10. Procédé selon la revendication 9, dans lequel le dérivé d'acide polymérisable est un anhydride d'acide, de préférence l'anhydride maléique.

11. Procédé selon la revendication 9 ou la revendication 10, dans lequel l'épisulfure est choisi parmi le sulfure de propylène, le sulfure d'éthylène, le sulfure de cyclohexène, l'épithiodécane, l'épithiododécane et le 7-thiabicyclo[4.1.0]heptane.

12. Procédé selon l'une quelconque des revendications précédentes, dans lequel le film polymère présente une épaisseur allant de 10 à 50 nm, de préférence de 10 à 30 nm et, mieux encore, de 15 à 25 nm.

**13.** Procédé selon la revendication 1, dans lequel le plasma est induit par radiofréquence en mode pulsé.

**14.** Procédé de fabrication d'une pièce en matériau composite comprenant des fibres de carbone et une matrice organique, lequel procédé comprend la mise en contact des fibres avec une résine durcissable par polymérisation en chaîne et la polymérisation de la résine, et est **caractérisé en ce qu'**il comprend de plus la mise en oeuvre d'un procédé selon l'une quelconque des revendications 1 à 13 savant que les fibres ne soient mises en contact avec ladite résine.

**15.** Procédé selon la revendication 14, dans lequel la résine est une résine polymérisable sous rayonnement.

**16.** Procédé selon la revendication 15, dans lequel la résine est choisie parmi les résines époxy acrylates, les novolaque acrylates, les polyuréthanne acrylates, les résines bis-maléimides et les résines époxydes.

**17.** Procédé selon la revendication 16, **caractérisé en ce que** la résine est ne résine époxy acrylate.

**Patentansprüche**

**1.** Verfahren zur Verbesserung der Adhäsion von Kohlenstofffasern hinsichtlich einer organischen Matrix, die mit diesen Fasern ein Verbundmaterial bildet, wobei dieses Verbundmaterial erhalten wird durch in Kontakt bringen der Fasern mit einem durch Kettenpolymerisation aushärtbaren Harz und anschließende Polymerisation des Harzes, wobei das Verfahren darin besteht, die Oberfläche der Kohlenstofffasern, bevor diese Fasern in Kontakt mit dem Harz gebracht werden, mit einem Polymerfilm zu beschichten, der funktionelle Gruppen enthält, die während der Polymerisation des Harzes als Kettenübertragungsmittel dienen, wobei der Polymerfilm durch plasmaunterstützte chemische Dampfphasenabscheidung (PACVD) erhalten wird.

**2.** Verfahren nach Anspruch 1, bei dem die funktionellen Gruppen, die als Kettenübertragungsmittel dienen, die funktionellen Gruppen -I, -Br, -Cl, -F, -SH, -OH, -NH-, $-NH_2$, -PH-, $-PH_2$ oder =S sind.

**3.** Verfahren nach Anspruch 2, bei dem die funktionellen Gruppen, die als Kettenübertragungsmittel dienen, Thiolgruppen sind.

**4.** Verfahren nach einem der vorhergehenden Ansprüche, bei dem die Oberfläche der Kohlenstofffasern mit dem Polymerfilm durch Polymerisation eines polymerisierbaren Monomers auf dieser Oberfläche beschichtet wird, das eine funktionelle Gruppe enthält, die als Kettenübertragungsmittel dient.

**5.** Verfahren nach einem der Ansprüche 1 bis 3, bei dem die Oberfläche der Kohlenstofffasern mit dem Polymerfilm beschichtet wird durch:

a) Polymerisation eines polymerisierbaren Monomers auf dieser Oberfläche, das eine funktionelle Gruppe enthält, die in eine funktionelle Gruppe umgewandelt werden kann, welche als Kettenübertragungsmittel dient, und anschließend
b) Umwandlung der funktionellen Gruppen, die der derart erhaltene Polymerfilm enthält.

**6.** Verfahren nach einem der Ansprüche 1 bis 3, bei dem die Oberfläche der Kohlenstofffasern mit dem Polymerfilm beschichtet wird durch:

a) Polymerisation eines polymerisierbaren Monomers auf dieser Oberfläche, und anschließend
b) Pfropfen von funktionellen Gruppen, die als Kettenübertragungsmittel dienen, auf den derart erhaltenen Polymerfilm.

**7.** Verfahren nach Anspruch 6, bei dem das Pfropfen durchgeführt wird, indem man die auf der Oberfläche des Polymerfilms vorhandenen funktionellen Gruppen mit einer organischen Verbindung reagieren lässt, die sich durch Ringöffnung in kovalenter Weise mit den funktionellen Gruppen verbindet und Gruppen erzeugt, die eine funktionelle Gruppe enthalten, welche als Kettenübertragungsmittel dient.

8. Verfahren nach Anspruch 7, bei dem die auf der Oberfläche des Polymerfilms vorhandenen funktionellen Gruppen Carboxylgruppen sind und zur Reaktion gebracht werden mit einem Episulfid, was Gruppen erzeugt, die eine funktionelle Thiolgruppe enthalten.

9. Verfahren nach Anspruch 8, bei dem der Polymerfilm, der funktionelle Carboxylgruppen umfasst, durch Polymerisation einer polymerisierbaren Säure oder eines polymerisierbaren Säurederivats erhalten wird.

10. Verfahren nach Anspruch 9, bei dem das polymerisierbare Säurederivat ein Säureanhydrid ist, vorzugsweise Maleinsäureanhydrid.

11. Verfahren nach Anspruch 9 oder Anspruch 10, bei dem das Episulfid ausgewählt ist aus Propylensulfid, Ethylensulfid, Cyclohexensulfid, Epithiodecan, Epithiododecan und 7-Thiabicyclo [4.1.0] heptan.

12. Verfahren nach einem der vorhergehenden Ansprüche, bei dem der Polymerfilm eine Dicke zwischen 10 und 50 nm aufweist, vorzugsweise zwischen 10 und 30 nm, und noch besser zwischen 15 und 25 nm.

13. Verfahren nach Anspruch 1, bei dem das Plasma durch Hochfrequenz im Pulsmodus induziert wird.

14. Verfahren zur Herstellung eines Werkstücks aus Verbundmaterial, das Kohlenstofffasern und eine organische Matrix umfasst, wobei das Verfahren das in Kontakt bringen der Fasern mit einem durch Kettenpolymerisation aushärtbaren Harz und die Polymerisation des Harzes umfasst und **dadurch gekennzeichnet ist, dass** es ferner die Durchführung eines Verfahrens nach einem der Ansprüche 1 bis 13 umfasst, bevor die Fasern in Kontakt mit dem Harz gebracht werden.

15. Verfahren nach Anspruch 14, bei dem das Harz ein unter Bestrahlung polymerisierbares Harz ist.

16. Verfahren nach Anspruch 15, bei dem das Harz ausgewählt ist aus den Epoxydacrylatharzen, den Acrylat-Novolacken, den Acrylat-Polyurethanen, den Bismaleimid-Harzen und den Epoxydharzen.

17. Verfahren nach Anspruch 16, **dadurch gekennzeichnet, dass** das Harz ein Epoxydacrylatharz ist.

**Claims**

1. Process for improving the adhesion of carbon fibres with regard to an organic matrix forming, with these fibres, a composite material, this composite material being obtained by bringing the fibres into contact with a resin which can be cured by chain polymerization, followed by polymerization of the resin, which process consists in coating the surface of the carbon fibres, before these fibres are brought into contact with the resin, with a polymer film which comprises functional groups acting as chain transfer agents during the polymerization of the said resin, the polymer film being obtained by Plasma Assisted Chemical Vapour Deposition (PACVD).

2. Process according to claim 1, in which the functional groups acting as chain transfer agents are -I, -Br, -Cl, -F, -SH, -OH, -NH-, -NH$_2$, -PH-, -PH$_2$ or =S functional groups.

3. Process according to claim 2, in which the functional groups acting as chain transfer agents are thiol functional groups.

4. Process according to any one of the preceding claims, in which the surface of the carbon fibres is coated with the said polymer film by polymerization on this surface of a polymerizable monomer comprising a functional group acting as chain transfer agent.

5. Process according to any one of claims 1 to 3, in which the surface of the carbon fibres is coated with the said polymer film by:

   a) polymerization on this surface of a polymerizable monomer comprising a functional group which can be converted to a functional group acting as chain transfer agent, then
   b) conversion of the functional groups which the polymer film thus obtained comprises.

6. Process according to any one of claims 1 to 3, in which the surface of the carbon fibres is coated with the said polymer film by:

  a) polymerization on this surface of a polymerizable monomer, then
  b) grafting to the polymer film thus obtained of functional groups acting as chain transfer agents.

**7.** Process according to claim 6, in which the grafting is carried out by reacting the functional groups present at the surface of the polymer film with an organic compound which, by ring opening, becomes covalently bonded to the said functional groups and generates groups comprising a functional group acting as chain transfer agent.

**8.** Process according to claim 7, in which the functional groups present at the surface of the polymer film are carboxyl functional groups and are reacted with an episulphide, which generates groups comprising a thiol functional group.

**9.** Process according to claim 8, in which the polymer film comprising carboxyl functional groups is obtained by polymerization of a polymerizable acid or of a polymerizable acid derivative.

**10.** Process according to claim 9, in which the polymerizable acid derivative is an acid anhydride, preferably maleic anhydride.

**11.** Process according to claim 9 or claim 10, in which the episulphide is chosen from propylene sulphide, ethylene sulphide, cyclohexene sulphide, epithiodecane, epithiododecane and 7-thiabicyclo-[4.1.0]heptane.

**12.** Process according to any one of the preceding claims, in which the polymer film exhibits a thickness ranging from 10 to 50 nm, preferably from 10 to 30 nm and better still from 15 to 25 nm.

**13.** Process according to claim 1, in which the plasma is pulsed-mode radiofrequency-induced.

**14.** Process for the manufacture of a component made of composite material comprising carbon fibres and an organic matrix, which process comprises bringing the fibres into contact with a resin which can be cured by chain polymerization and polymerizing the resin and is **characterized in that** it furthermore comprises the implementation of a process according to any one of claims 1 to 13, before the fibres are brought into contact with the said resin.

**15.** Process according to claim 14, in which the resin is a resin which can be polymerized under radiation.

**16.** Process according to claim 15, in which the resin is chosen from epoxy acrylate resins, novolac acrylates, polyurethane acrylates, bismaleimide resins and epoxide resins.

**17.** Process according to claim 16, **characterized in that** the resin is an epoxy acrylate resin.

FIG.1

## RÉFÉRENCES CITÉES DANS LA DESCRIPTION

**Documents brevets cités dans la description**

- JP 3076869 A
- EP 1484435 A
- EP 0640702 A
- JP 2002327374 B
- EP 0965679 A

**Littérature non-brevet citée dans la description**

- **WU et al.** *Carbon,* 1996, vol. 34, 59-67
- **TSUBOKAWA.** *Carbon,* 1993, vol. 31, 1257-1263
- **SIFFER et al.** *Analytica Chimica Acta,* 2005, vol. 539, 289-299